# EUROPEAN PATENT APPLICATION

(11) **EP 0 881 824 A2**
(43) Date of publication of application: **02.12.1998**
(21) Application number: 98109366.9
(22) Date of filing: 22.05.1998
(51) Int. Cl.: H04N 1/44

(54) **Electronic mail-capable communication terminal device and password changing method**

(30) Priority: 28.05.1997 JP 138855/97
(71) Applicant: Murata Kikai Kabushiki Kaisha, Minami-ku, Kyoto-shi, Kyoto (JP)
(72) Inventor: Eguchi, Masashi, Fushimi-ku, Kyoto-shi, Kyoto (JP)
(74) Representative: Liedl, Christine, Dipl.-Chem.

(57) **Abstract**

An electronic mail-capable facsimile machine (20) which simplifies a password changing operation and ensures that a password registered with a network and a password newly entered in the facsimile machine (20) do not differ from each other. After the user changes the password in the facsimile machine (20), the CPU (1) automatically logs into the network and changes the password registered with the network to the newly entered password.

## Description

The present invention relates to a communication terminal device provided with electronic mail communication capability, like a facsimile machine, having capability of connecting to electronic mail.

In recent years, computer communication networks like the Internet, comprised of local computer communication networks further networked over communications lines and capable of transmitting electronic mail, have grown. Computer communication networks allow for easy error correction, and permit communication with computers not only domestically, but from overseas, as well, at only the cost of communicating with a local provider (a service that provides connection to a computer network).

Conventional communication procedures and methods for G3 facsimile machines differ from that of computer communication networks, and therefore it has not been possible to connect these machines directly to computer communication networks. However, by converting into electronic mail format the image data of a document to be sent, facsimile machines can be enabled to transmit image data to these computer communication networks.

When a user attempts to log-in to the network, the user is asked to enter preregistered user ID and user-selected password in order to inform the network and the provider's host computer that the user is an authorized user.

Since the network determines whether or not the user is an authorized user solely on the basis of the user ID and password, there is a danger that if a user's password becomes known to another person, that other person can illegally use the password to gain access to the provider and run up user charges. Further, a user often selects a password that is easy to remember, such as his or her birthday, telephone number, etc. Consequentially, the password is easily stolen, and so it is desirable that the user changes the password from time to time.

Recently, typical communication terminal devices have utilized an automated log-in procedure whereby the telephone number of the network is dialed and the log-in ID and passwords are entered automatically.

This has meant that data such as the log-in ID and password of the user must be stored in the communication terminal device. Consequentially, when the user wants to change a password, he or she has to change not only the password registered with the network but also the password stored in the communication terminal device. Thus, the password changing operation becomes troublesome and problematic, and there is a danger that the new log-in data that is stored in the terminal may end up different from that provided to the network.

Japanese Patent Application, Laid-Open Publication No. 9-107405 filed October 13, 1995 and published April 22, 1997 discloses a system including a private branch exchange (PBX) and a mail box apparatus. An extension number registered in the mail box apparatus is not changed by an operator but by the exchange.

Thus, a correct extension number is always re-registered.

In order to solve these problems of the conventional technology it is an object of the present invention to provide an electronic mail-capable communication terminal device, like a facsimile machine, which simplifies the password changing operation, and prevents differences from arising between the new password stored in the terminal and that provided to the network by automatically logging in to the network and registering a new password when the user changes the password stored in the terminal.

In one aspect of the present invention, there is provided an electronic mail-capable communication terminal device provided with electronic mail communication capability and which stores a password for logging onto (into) a network, characterized in that the communication terminal device includes an accepting means for accepting a first input for changing the password, and a changing means for logging into the network and changing the old password registered with the network to a new password when the password is changed.

The password is registered in the network. The communication terminal device stores the registered password in its memory. Upon changing the password stored in the memory, the network is automatically logged into, and the registered password is automatically changed. In this way the password changing operation can be simplified, and no variation will arise between the password stored in the communication terminal device and that registered with the network. The user of the communication terminal does not change the password in the network by himself or herself.

The communication terminal device may further include an indication means for indicating that the password is being changed when the network is accessed in order to change the password. The fact that the network is logged into and the password is being changed is reliably indicated to the user.

The communication terminal device may further include a request means for requesting that the new password be reinput, a determining means for determining if the reinput password and the first input new password are the same, and a second indication means for displaying a message or sign or making a sound to indicate that the reinput password and the first password are different if this is the case. The user reliably confirms that the user has changed the password to a new password.

The first and second indication means may include at least one lamp such as LEDs.
- FIG.1: is a block diagram of the communication terminal device of the present invention.
- FIG.2: is an outline diagram of a user registration table used in the communication terminal device shown in FIG.1.
- FIG.3: is a flow chart illustrating the password changing operation executed by the communication terminal device shown in FIG.1.

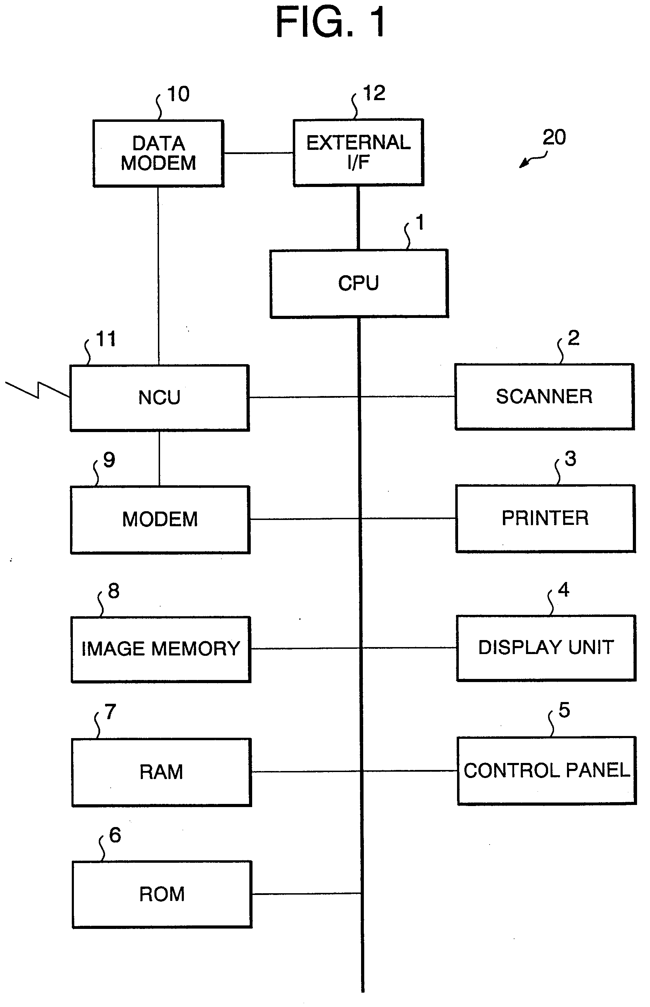

Referring to FIG. 1, illustrated is a structure of an electronic mail-capable facsimile machine 20 according to the present invention. In the description below, the present invention is embodied in a facsimile machine. Further, in this embodiment, the present invention utilizes the Internet as a computer communication network.

CPU 1 not only controls the various hardware elements of the facsimile machine 20 over the BUS, but also executes software stored in ROM 6 to encode or decode image data according to coding schemes such as MH, MR, MMR, etc., convert the coded image data to and from TIFF format (will be described), and then to and from binary text format, edit the electronic mail, switch the modems, and control the RS232C line by using AT commands.

CPU 1, as described in detail below, executes software to automatically log-in to the network, and change the password registered with the network to the new password when the user changes the password stored in the facsimile machine 20. Further, CPU 1 also executes software which indicates to the user that the password is being changed by, for example, displaying a message, illuminating LEDs, or playing an audio message when the facsimile machine 20 is accessing the network in order to change the password. Still further, the CPU 1 executes software that requests the user to reenter the new password, and if the reentered new password is different from the first entered new password, displays a message to this effect.

In image format conversion, when electronic mail image data is transmitted, the G3-formatted image is converted into a TIFF (Tagged Image File Format) image which can be used by common computers. When image data is received, the image is converted back from TIFF to G3 format. TIFF format has been made public by Adobe Systems, Inc., and treatment of various classes of image data has been specified including not just binary black-and-white data, but also gray-scale and full-color. One of these classes, class F, defines the conversion of MH, MR, MMR, etc., encoded G3-type image data. Consequentially, by appending Class F TIFF header information to the top of the G3 image data, TIFF conversion from G3 format can be enabled.

In binary text conversion, binary data is converted to text data when electronic mail image data is transmitted, and text data is converted to binary image data when electronic mail image data is received. Since some computers on the Internet cannot handle binary image data, when binary TIFF image data is sent over the Internet, it must first be converted to text data in order for it to be reliably received by the recipient. The text data format for use over the Internet has been specified as 7-bit code in RFC (Request For Comments) 822 published by the Internet Engineering Task Force (IETF).

RFC 822 and 1341 discloses how to use MIME (Multipurpose Internet Mail Extensions) base 64 to convert between binary and text data. According to this method, each of 64 characters (capital letters, lower case letters, numbers, and "+" and "/") is assigned to one value of the 6-bit binary data set, enabling the conversion. MIME is defined in, for instance, RFC121.

In mail editing, when electronic mail image data is sent, CPU 1 appends electronic mail header information to the text-formatted TIFF image data enabling it to be sent as electronic mail. When electronic mail image data is received, CPU 1 removes the electronic mail header information from the electronic mail text formatted data, and converts the text data back to TIFF image data format. Since certain specified information must be included in the header of Internet electronic mail for administrative purposes, CPU 1 appends "From: (the user's electronic mail address)," "To: (the recipient's electronic mail address)," and "Subject: (the mail title)" to the top of the TIFF image data.

Scanner 2 scans an image with an image scanner like a CCD and outputs binary black-and-white image data. Printer unit 3 is provided with an electro-photography type printer and outputs image data received from other G3 facsimile machines or received over the Internet. Display unit 4 is provided with an LCD device, and displays the operating status of the facsimile machine 20 and image data.

Control panel 5 contains a number pad, speed-dial keys, one-touch dialing keys and various function keys required to operate the facsimile machine 20. ROM 6 stores software required to operate the facsimile machine. RAM 7, comprised of SRAM, flash-memory, or the like, temporarily stores data generated during execution of the software.

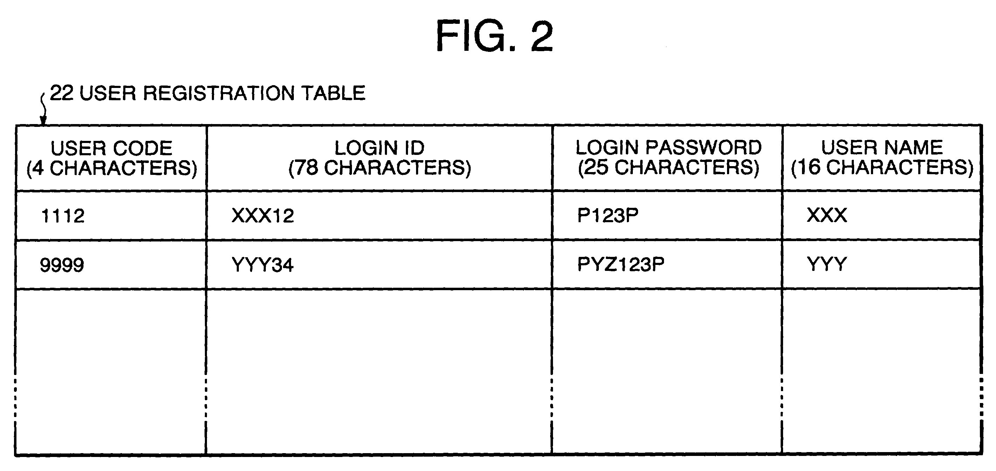

In the present embodiment, network log-in data such as the log-in ID, log-in passwords, user names, etc., of each of a plurality of users are stored, as shown in FIG. 2, in a table 22 stored in RAM 7.

Image memory 8 is comprised of DRAM or the like, and stores image data. Modem 9 is a modem for normal facsimile communication of image data scanned in by scanner 2, and is not provided with data communication capabilities. Data modem 10 is a modem for communication of image data converted to electronic mail for transmission or reception via the Internet. Data modem 10 is connected via a cable to an external telephone terminal provided, for example, in NCU 11, and via an RS232C line to the serial port of an external I/F 12 which is used for connection to a personal computer. NCU 11 opens and closes an analog telephone circuit.

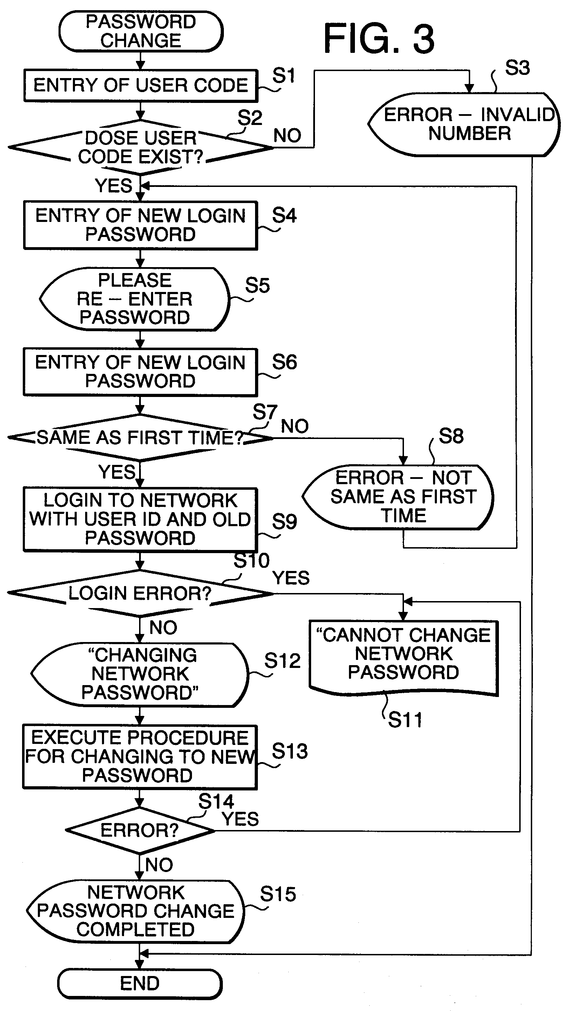

Next, the password changing operation of the present invention will be described based on the flow chart of FIG. 3.

When the user enters the user code (Step S1), it is checked if the code entered is stored in the user registration table 22 (Step S2). If the entered user code is not found in the user registration table 22 an error code (like "invalid number", for example) is displayed (Step S3), and the program terminates.

If the entered user code is in the user registration table 22, the program waits for the user to enter the new log-in password (Step S4). A message asking the user to reenter the new password is then displayed (Step S5), and the program then waits for the user to reenter their new password (Step S6). It is then determined whether the reentered password is the same as the password entered at step S4 (Step S7). If the password is different, an error message is displayed (like "second new password differs from the first") (Step S8), and the program returns to step S4 and awaits input of the new log-in password.

If the reentered password is the same as the new password entered at step S4, the user ID and old password both stored in the user table 22 in the memory 7 are used to log-in to the network (Step S9). It is then checked if a log-in error has been generated (e.g., non-response from the network, or similar circumstances) (Step S10). If an error has occurred, an error message (for example, "network password cannot be changed") is printed out or displayed (Step S11).

If log-in to the network is successful, a message is displayed such as "network password change in progress" (Step S12), and a procedure is executed to change the old password registered with the network to the new password (Step S13). When accessing the network to change the password, it is also satisfactory to illuminate LEDs or use a voice message to indicate that the password is being changed instead of displaying a message.

It is then checked whether the password has been successfully changed and logging-out has been performed (Step S14). If logging out was performed without changing the password, an error message (for example, "network password cannot be changed") is printed out or displayed (Step S11).

If, on the other hand, the changing of the password was accomplished before logging-out, a message such as "network password change completed" is displayed (Step S15).

The communication terminal device in the form of facsimile machine and the method of changing a network password is disclosed in Japanese Patent Application No. 9-13885 filed May 28, 1997 in JPO and the entire disclosure thereof is incorporated herein by reference.

## Claims

1. An electronic mail-capable communication terminal device (20) having electronic mail communication means (1) for sending and receiving electronic mail via a network, characterized in that the electronic mail-capable communication terminal device (20) further includes:
storage means (7) for storing a password for logging into the network, the password being registered with the network;
accepting means (5) for accepting a first input to change the password in the storage means (7) to a new password; and
means (1) for logging into the network and changing the password registered with the network to the new password after the password stored in the storage means is changed.

2. The electronic mail-capable communication terminal device (20) of claim 1, characterized in that the communication terminal device (20) further comprises first indication means (3, 4) for indicating that the password is being changed when the network is accessed in order to change the password.

3. The electronic mail-capable communication terminal device (20) of claim 1 or 2, characterized in that the communication terminal device (20) further comprises:
first request means (4) for requesting that the new password be reinput;
first determination means (1) for determining if the reinput password and the first input password are the same; and
second indication means (3, 4) for indicating that the reinput password and the first input password are different when the first input password and the reinput password differ.

4. The electronic mail-capable communication terminal device (20) of claim 1, 2 or 3, characterized in that the accepting means includes:
second request means (4) for requesting a user code to be input before acceptance of new password input;
second determination means (1) for determining if the input user code is the same as a user code stored in the communication terminal device (20); and
permitting means (1) for permitting the input of the new password when the input user code matches the user code stored in the communication terminal device (20).

5. The electronic mail-capable communication terminal device (20) of claim 2, 3 or 4, characterized in that the first indication means includes a display, at least one lamp or a voice message generator.

6. The electronic mail-capable communication terminal device (20) of claim 3, 4 or 5, characterized in that the first request means includes a display, at least one lamp or a voice message generator.

7. The electronic mail-capable communication terminal device (20) of claim 3, 4 or 5, characterized in that the second indication means includes a display, at least one lamp or a voice message generator.

8. The electronic mail-capable communication terminal device (20) of claim 4, 5, 6 or 7, characterized in that the second request means includes a display, at least one lamp or a voice message generator.

9. The electronic mail-capable communication terminal device (20) of any one of foregoing claims, characterized in that the communication terminal device is a facsimile apparatus.

10. A method of changing a network password comprising the steps of:
(A) accepting an input for change of password;
(B) logging into the network using an old password; and
(C) changing a password registered with the network to a new password.

11. The method of changing a network password of claim 10, characterized in that the step (A) includes the substeps of:
(A1) entering a new password;
(A2) requesting reentering of the new password;
(A3) determining if the reentered password is the same as or different from the new password entered at the substep (A1); and
(A4) informing that the reentered password is different from the first entered password when the first entered password differs from the reinput password.

12. The method of changing a network password of claim 11, characterized in that the substep (A4) includes displaying a message or/and generating a voice message.
